# EUROPEAN PATENT APPLICATION

(11) **EP 1 767 328 A2**
(43) Date of publication of application: **28.03.2007**
(21) Application number: 06003158.0
(22) Date of filing: 16.02.2006
(51) Int. Cl.: B29C 44/34, B29C 44/58

(54) **Mould with means for depositing release agent for making articles of polyurethane foam**

(30) Priority: 22.09.2005 SI 200500272
(71) Applicant: Koroski Holding d.o.o., 2380 Slovenj Gradec (SI)
(72) Inventor: Grabnar, Dusan, 2000 Maribor (SI); Gorsek, Dusan, 2370 Dravograd (SI)
(74) Representative: Vonnemann, Gerhard

(57) **Abstract**

The mould with means for depositing release agent for making articles of polyurethane foam resolves the problem of a simple, fast, uniform, to the environment and people friendly and cost-effective deposit of the liquid release agent (8) into the mould (1) and is also of simple and compact construction.

Automatic tap nozzles (4) and injector nozzles (5) are interactively integrated into uniform elements, which are in and through the mould (1) walls constructed in the way that they extend into nests (6). They simultaneously serve for injecting the liquid separating agent (8) on the surface (9,10) of the nest (6) walls before filling by polyurethane components, as well as for ventilation during the production procedure of the foamed articles.

The release agent (8) injection is thereby carried out when the mould (1) is closed or when its parts (2) and (3) are separated from each other by the air slit (7).

## Description

The subject of the invention is a mould for making inserts from polyurethane foam with integrated substance for depositing of separating agent, or more precisely, it is a mould whereby injector nozzles for depositing of separating agent into the nest of the product are integrated in the automatic tap nozzles.

According to the international patent classification this invention belongs to B 29C 33/44 and additionally to B 29C 33/56 and to B 29C 33/00.

The technical problem being solved by this invention is such a construction of the mould for making polyurethane foamy inserts preferentially for the automotive industry needs, which will make the separating agent deposit into the product nest at the closed tool or mould possible, whereby the human factor will be excluded in this operation, and the deposit procedure faster, the separating agent deposit more uniform and its consumption smaller, the separating agent negative impacts on the environment and people will be reduced, and simultaneously the mould will be construction simple and compact.

To achieve an easier removal of polyurethane foamy inserts from the tool, before filling the mould by polyurethane components it is required to carry out the liquid separating agent deposit on the surface of the so-called product nest. The product nest is a name for a hollow, empty space between the mould upper and nether half, wherein products or foamy pieces are formed in the foaming procedure. The separating agent will thus be used for forming bare polyurethane foam in therefor suitable moulds, and it disables foam to stick with the mould. The latter is very important to achieve quality surface of products. Therefore, the separating agent application in the foamy inserts production procedure is essential and very important. It applies however that the separating agent deposit must be uniform as much as possible over the entire surface of the product nest, as in the opposite case deformations can appear on the polyurethane foam product surface. The separating agent consists of various chemical substances like solvents and solid particles, therefore, it is harmful both for people and the wide environment.

To date most highly spread known solution is based on depositing the separating agent by means of kinetic or electrostatic energy onto inner surfaces of moulds, or onto surfaces of the product nest respectively, namely by injecting the separating agent into open moulds. This method of depositing the separating agent is carried out by means of pneumatic or electrostatic injector guns, namely manually, semiautomatically and automatically by a robot. Weakness and deficiency of these known methods is above all in the fact that the separating agent deposit into the moulds interior is carried out from outside and into open moulds respectively. For this reason, the separating agent consumption is big, deposits are non-uniform and above all very aggravating and harmful for people and the environment. Experiences have shown that the separating agent losses amount to about 40%. For this reason, the moulds outer walls, workers and vicinity are therewith highly loaded by the spurted separating agent. Therefore, it is each time required to clean moulds and their nearby working environment, what represents a harmful impact both on operators and on the environment, and not last but least, it represents stoppages and large expenses in the procedure itself. For the workers and environment protection, it is therefore required to build special explosion safe ventilation systems in the production premises, and which are not completely safe, and which additionally require each time replacement of contaminated filters.

According to the document GB 8618616, a procedure of forming products from an unsaturated artificial resin is known, whereby dust is deposited into an open tool. Deficiency of this known solution is in the fact that the deposit is executed from outside and into the open tool, and it deals with the deposit of powder and not of the liquid separating agent. Further, its weakness is in expensive purifying plants and in its harmful impact on the environment and human health.

According to the document DE 103 20 341 there is known an injector device and the procedure of injecting products from polyurethane containing an external mixing and a suitable nozzle. It resolves mixing of A+B components of polyurethane in the said space inside the tool or moulds respectively. In this way generated polyurethane is then deposited on a suitable product mould. It is namely its deficiency that it fails to resolve the separating agent deposit, and it is neither applicable for this purpose.

The problem that has remained unsolved is above all in the deposit of a liquid separating agent into the product nest, namely at an open tool or mould respectively, which is above all harmful to people and the environment, and besides the deposit is non-uniform, and the separating agent losses are big.

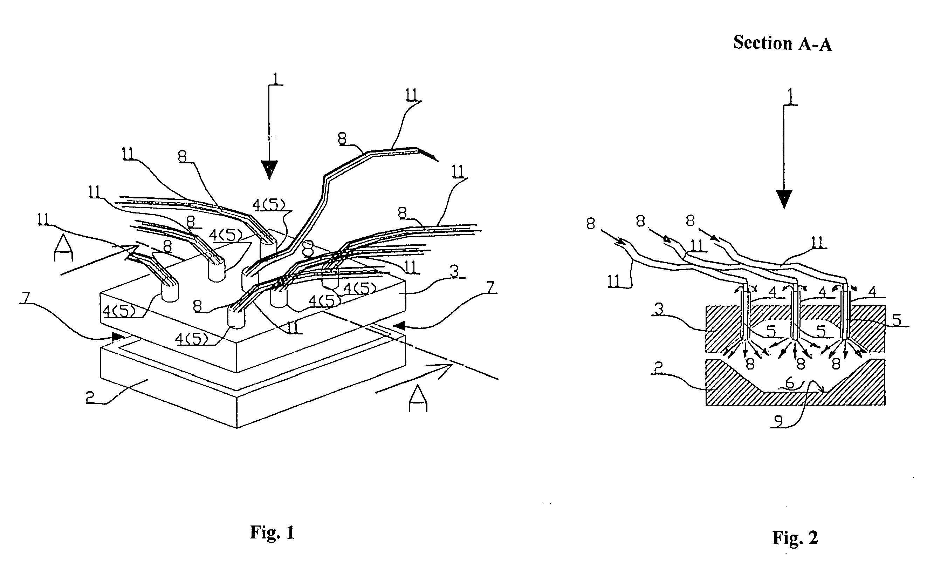

According to the invention, the problem is resolved by a mould for making inserts from polyurethane foam with integrated substance for depositing of separating agent, having injector nozzles for depositing the separating agent into the mould, and which are integrated inside the automatic tap nozzles. The invention will be described following an example of its feasibility and figures, which show
Fig. 1 Closed mould in the axonometric projection according to the invention
Fig. 2 Closed mould in the A-A cross section

According to the invention, the mould 1 is constructed of the nether part 2 and upper part 3, which in the closed position form a joint inner hollow space or nest 6 respectively. In the area of sealing surfaces or in the divisible plane of the mould 1, its nether part 2 and its upper part 3 are distant from each other by the air slit 7 size.

In the shown feasible example, the automatic tap nozzles 4 are built in the upper part 3 of the mould 1, and in which injector nozzles 5 are integrated. The number of automatic tap nozzles 4 with integrated injector nozzles 5 is optional; their arrangement over the upper part 3 is likewise optional. Their number and location thus depend on the form and structure of polyurethane inserts or the nest 6 respectively wherein they are produced. Automatic tap nozzles 4 with injector nozzles 5 are constructed perpendicular on and through the front wall of the upper part 3 in the way that they extend a bit into the nest 6 by their tap nozzles and injector ends. Each injector nozzle 5 is equipped with its own feeding pipe 11, being on the other side joined with an optional container of the liquid separating agent 8.

In some other feasible example, which is not shown, the automatic tap nozzles 4 with integrated injector nozzles 5 are constructed in the upper part 3 of the mould 1 likewise through its side walls, what is equally effective for the beneath lying nether part 2. Likewise, in some other feasible example, the automatic tap nozzles 4 with injector nozzles 5 are constructed through the upper part 3 at angles, being smaller or bigger than 90°. They can thus be constructed at optional angles to the walls of the upper part 3, and likewise in an interactive combination of various angles. Namely, depending on the size and form of the nest 6 inside the mould 1.

There is also possible a construction of completely opposite integration of the automatic tap nozzle 4 and the injector nozzle 5, namely such a construction where the automatic tap nozzle 4 will be integrated inside the injector nozzle 5.

Likewise, in some other feasible example, also not shown, a joint feeding pipe 11 leads to injector nozzles 5 to feed the liquid separating agent 8, which flows into an adequate distributor in front of them, and from this distributor we lead the separating agent 8 further separately into each individual injector nozzle 5 located into it belonging automatic tap nozzle 4.

As in previously described examples the integrated injector nozzles 5 and automatic tap nozzles 4 are constructed on or in the upper part 3 of the mould 1, so can in identical examples be also constructed on or in the nether part 2 of the mould 1 respectively, or even combined in the upper part 3 and in the nether part 2 simultaneously.

And it applies for all previously described feasible examples that the number of integrated automatic tap nozzles 4 and injector nozzles 5 in individual moulds 1 is optional, as their locations are also optional on their upper part 3 and/or nether part 2. The latter thus depends on the purpose and construction of the moulds 1, and consequently on the form and features of therein manufactured polyurethane foamy inserts.

It applies however that the mould 1 must have so many injector nozzles 5 located in so many locations on or through the upper part 3 and/or the nether part 2 that the injection or deposit of the liquid separating agent 8 is made possible over the entire volume of the nest 6 or over its surfaces 9 and 10 respectively. There are likewise possible various constructions of moulds 1, as for instance by already described exclusive use of integrated automatic tap nozzles 4 and injector nozzles 5. There is also possible a combined construction of automatic tap nozzles 4 with integrated injector nozzles 5, simultaneously with independent automatic tap nozzles 4 without built-in injector nozzles 5 and vice versa.

As already mentioned in the preamble of this invention, before filling polyurethane components in the mould 1 the adequate liquid separating agent 8 should be injected. In this technological operation, the mould 1 is closed or its nether part 2 and upper part 3 are distant from each other by the air slit 7 size to equalize pressure inside the nest 6. In the opposite case overpressure would occur in the nest 6 due to injecting the separating agent.

The liquid separating agent 8 is fed under pressure from the unshown container and along the feeding pipe 11 into injector nozzles 5, which inject the liquid separating agent 8 into the nest 6 under pressure. Thereby, haze is created in it, which makes possible that the separating agent 8 is uniformly deposited over the surface of the nest 6 or over the entire surface 9 in the nether part 2 and over the entire surface 10 in the upper part 3 of the mould 1. The nether part 2 and the upper part 3 of the mould 1 in the divisible plane of the mould 1, are distant from each other by the air slit 7 for preventing creation of overpressure during the separating agent 8 injection through injector nozzles 5 into the nest 6.

The quantity and time of the separating agent injection through the injector nozzles 5 into the nest 6 of the mould 1 are defined by a suitable programme inside the technological procedure, which is as a rule specific for each type of products from polyurethane foam or specific to this product adjusted moulds 1 respectively. And it applies that the quantity and geometry of the separating agent 8 deposit into the mould 1 intended for production of polyurethane foamy inserts should be defined optimal as to the required specificity of an individual product and therewith of the mould 1.

As already said, by using a mould for making inserts from polyurethane foam with integrated substance for depositing of separating agent according to the invention, the procedure of injecting and depositing the liquid separating agent 8 on the surfaces 9 and 10 of the nest 6 is carried out at a closed mould or for the air slit 7 at the mould 1 ajar. In this way, the separating agent 8 deposit from outside into the open mould 1 is omitted. Due to the aforesaid, the deposit is faster and more uniform. This is made possible by injector nozzles 5, which are in the upper part 3 integrated in automatic tap nozzles 4 and/or vice versa. Empirical tests have shown that according to the invention, by depositing the liquid separating agent 8 through injector nozzles 5 into the moulds 1, up to 40% of the separating agent 8 is saved up per production unit or per their series respectively. Consequently, the workers and environment load by the harmful contents of the separating agent 8 is reduced, after the deposit operation the moulds 1 are cleaner, therefore, the cleaning costs are lower. If the separating agent 8 injection procedure is automated, then in this operation the workers presence is not needed. Investments in demanding and expensive explosive safe ventilation systems are also omitted, and consequently replacing and depositing waste and by the separating agent 8 contaminated filters.

## Claims

1. A mould for making inserts from polyurethane foam with integrated substance for depositing of separating agent, having built-in automatic tap nozzles in the mould upper half, **is characterised by the fact** that injector nozzles (5) are built in automatic tap nozzles (4) and/or vice versa in the way that they together create unified and among them separated integrated elements, and are preferentially through at least one wall of the upper part (3) or/and nether part (2) of the mould (1) constructed in the way that they extend into the nest (6) by their tap nozzle and injector free ends; that at least one or more elements integrated from automatic tap nozzles (4) and from injector nozzles (5) are built in the mould (1), namely in optional locations and at optional angles to the mould (1) external surface or wall respectively.

2. The mould according to claim 1 **is characterised by the fact** that as a rule each injector nozzle (5) is joined with to it belonging feeding pipe (11) for feeding the liquid separating agent (8).

3. The procedure of the mould adjustment and implementing the separating agent deposit procedure **is characterised by the fact** that during the procedure of depositing the liquid separating agent (8) through injector nozzles (5) into the nest (6) of the mould (1) the nether part (2) and the upper part (3) are distant from each other by an optionally large air slit (7), making impossible or disabling respectively the overpressure creation inside the nest (6).

4. The procedure according to claim 3 **is characterised by the fact** that for a uniform deposit of the liquid separating agent (8) over the entire surface of the nest (6) or its surfaces (9, 10) respectively, there is a condition that with automatic tap nozzles (4) integrated injector nozzles (5) are inside the upper part (3) and/or nether part (2), properly arranged and suitably directed at a corresponding angle towards the nest (6).

5. The procedure according to claim 3 **is characterised by the fact** that optimal parameters like quantity, time and geometry of the separating agent (8) deposit depend on demands of individual products or inserts respectively from polyurethane foam, and thereby consequently on specificity of the nests (6) construction inside the moulds (1).
